Europäisches Patentamt

(19) European Patent Office    (11) Publication number:    **0 043 282**

Office européen des brevets    **B2**

(12)    # NEW EUROPEAN PATENT SPECIFICATION

(45) Date of publication of the new patent specification: 21.03.90

(21) Application number: 81302969.1

(22) Date of filing: 30.06.81

(51) Int. Cl. ⁵: **H 02 K 55/00**

(54) Superconductive rotor, and electric machine incorporating it.

(30) Priority: 01.07.80 JP 88479/80

(43) Date of publication of application:
06.01.82 Bulletin 82/01

(45) Publication of the grant of the patent:
20.02.85 Bulletin 85/08

(45) Mention of the opposition decision:
21.03.90 Bulletin 90/12

(84) Designated Contracting States:
DE FR

(56) References cited:
DE-A-2 332 700
DE-A-2 820 984
DE-C-2 636 180
FR-A-2 362 518
FR-A-2 371 807
US-A-3 730 968

(73) Proprietor: Hitachi, Ltd.
5-1, Marunouchi 1-chome
Chiyoda-ku Tokyo 100 (JP)

(72) Inventor: Yamaguchi, Kiyoshi
6-20-3, Ayukawa-cho
Hitachi-chi Ibaraki (JP)
Inventor: Maki, Naoki
2650-83, Muramatsu
Tokai-mura Naka-gun Ibaraki (JP)
Inventor: Tamura, Toshio
232-2, Kamesaku-cho
Hitachiohta-shi Ibaraki (JP)

(74) Representative: Paget, Hugh Charles Edward
MEWBURN ELLIS & CO. 2/3 Cursitor Street
London EC4A 1BQ (GB)

EP 0 043 282 B2

LIBERGRAF, STOCKHOLM 1990

## Description

The present invention relates to a superconductive rotor, e.g. one having a superconductive field coil, such as used in an electric machine, e.g. a generator or a motor. More particularly, it relates to a structure for supporting a power lead and refrigerant supply and discharge pipes of the superconductive rotor.

A superconductive rotor generally has a field coil constituted by a superconductive material. Since the superconductive rotor has a superconductive coil, it is necessary to install a power lead for supplying the exciting electric current to the coil and pipes for circulating a refrigerant such as helium to cool the coil itself, the rotor structure and the power lead. The power leads and the pipes extend through a hollow shaft at the opposite side of the prime-mover or load of the superconductive rotor. The power lead is connected to a stationary power supply at the end of this shaft through a slip-ring, while the pipes are connected to a refrigerant supplying and discharging device through a refrigerant transfer joint or coupling as shown in U.S. Patent Specification 4 164 671. Therefore, the power lead and pipes are very long in comparison with their diameters. In consequence, it is necessary to fix the power lead and the pipes to the inside of the shaft and to prevent them from vibrating, so that the function of these power leads and pipes can be performed well enough.

In this superconductive rotor, the power leads and the pipes for refrigerant extend through the cavity in the hollow shaft and, accordingly, have considerable lengths. In the conventional superconductive rotor, these power leads and pipes are supported inside the shaft by means of a plurality of spacers which are arranged at suitable pitches in the axial direction therebetween (see DE-A-2 820 984). In order to make it easy to mount them in the shaft, however, it is necessary to provide a certain gap between the spacer and the shaft.

For this reason, in the conventional superconductive rotor, the power leads and the pipes cannot be fastened firmly to the inside of the shaft.

Moreover, it is more significant that the center of gravity of the power leads and pipes tied by the spacers does not coincide with the axis of the rotor.

We have discovered that the gap between the spacer and the shaft, and the difference between the center of gravity and the central axis of the rotor cause an unusual vibration of the power leads and pipes, and seriously damage the stability of superconductive state of the rotor.

DE-C-2 636 180 describes a superconducting rotor in which a cylinder carrying a rotor winding inside a hollow rotating body is supported at both axial ends by radial supports which are adjustable from outside the hollow body in order to avoid weight imbalances.

According to the present invention, there is provided a superconductive rotor having a hollow shaft leading thereto, refrigerant supply and discharge pipes extending through the hollow shaft and adapted for supplying and discharging a refrigerant for cooling the rotor, a plurality of spacers disposed in the hollow shaft and holding said pipes, and an axially extending supporting means in the form of a sleeve inside which the spacers are secured, characterized in that said sleeve is located in position in said shaft at a first axial end portion of said sleeve by a partition plate for maintaining a vacuum in said rotor and is held in said shaft by adjusting means for centering said sleeve from the outer side of said shaft at the other axial end portion of said sleeve.

Embodiments of superconductive rotors constructed in accordance with the invention will now be described by way of example, with reference to the accompanying drawings, wherein:

Fig. 1 is a sectional view showing a supporting structure for supporting power leads and refrigerant supply and discharge pipes in a first rotor,

Fig. 2 is a sectional view taken along a line II – II' in Fig. 1,

Fig. 3 is a similar sectional view of a supporting structure of another embodiment of the invention, and

Fig. 4 is a sectional view of a part of the structure shown in Fig. 1.

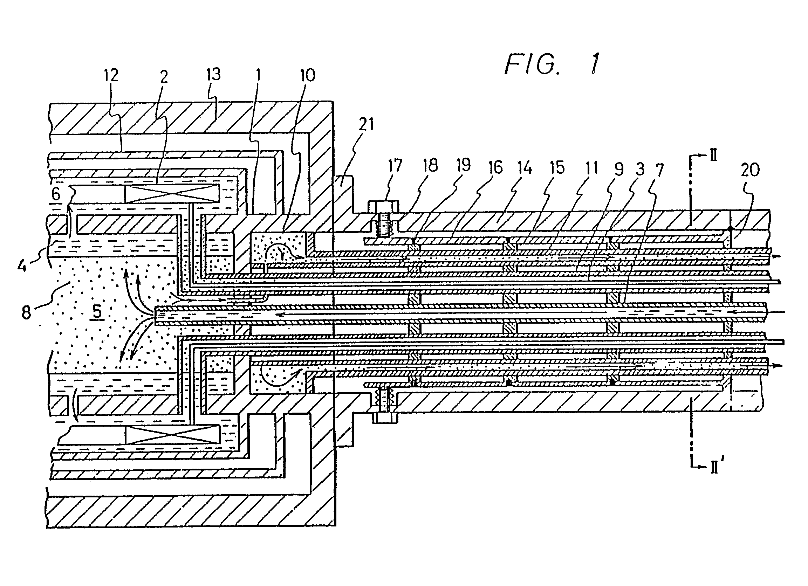

Fig. 1 shows a section of the construction of a supporting structure for supporting power leads and refrigerant supply and discharge pipes in a superconductive rotor at the end opposite to the prime mover or load. A superconductive field coil 2 fixed to a torque tube 1 is adapted to be excited by exciting electric current supplied through a power lead 3 which in turn is supplied with the exciting electric current through a slip-ring (not shown) connected thereto from a stationary power supply (not shown). The central portion of the torque tube 1 constitutes a tank 5 for a liquid refrigerant 4. The liquid refrigerant 4 is supplied from this tank 5 to a field coil 6 to cool the latter. The liquid refrigerant 4 is adapted to be supplied through a refrigerant supply pipe 7. The evaporated fraction 8 of the refrigerant is supplied through a power lead cover 9 and a cooling duct 10 to the power lead 3 and the torque tube 1 to reduce the heat transferred to the field coil 6. The refrigerant supply pipe 7, refrigerant discharge pipe 11 and the power lead cover pipe 9 are connected through a refrigerant supplying and discharging device (not shown) to a stationary refrigerant supply source and refrigerant receiving section.

The radiation heat input from the outside of the rotor is shielded by a shield 12. The major constituents of the rotor are an outer sleeve 13 and a shaft 14. The outer sleeve 13 functions as a vacuum vessel and an electro-magnetic damper shield. The shaft 14 carries the outer sleeve 13 and the torque tube 1, and is rotatably supported by means of bearings (not shown).

The refrigerant supply pipe 7, refrigerant discharge pipe 11 and the power lead cover pipe 9 are held by means of a plurality of spacers 15 arranged at suitable intervals in the axial direction. The spacers 15 are made of a reinforced plastics, steel or the like material. These spacers 15 are fitted in a supporting sleeve 16 made of stainless steel of the like material, and are fixed to the latter. Since the supporting sleeve 16 has a weight much smaller than that of the shaft 14, the fitting of the spacers 15 in the supporting sleeve 16 can be made without substantial difficulty. The fixing of the spacers 15 to the supporting sleeve 16 is made by applying an adhesive through apertures 19 formed in the portions of the wall of the supporting sleeve 16 wherein the spacers 15 are to be supported, from the outer peripheral side of the supporting sleeve 19. If the spacers 15 and the supporting sleeve 16 are made of weldable metals, the fixing may be made by welding.

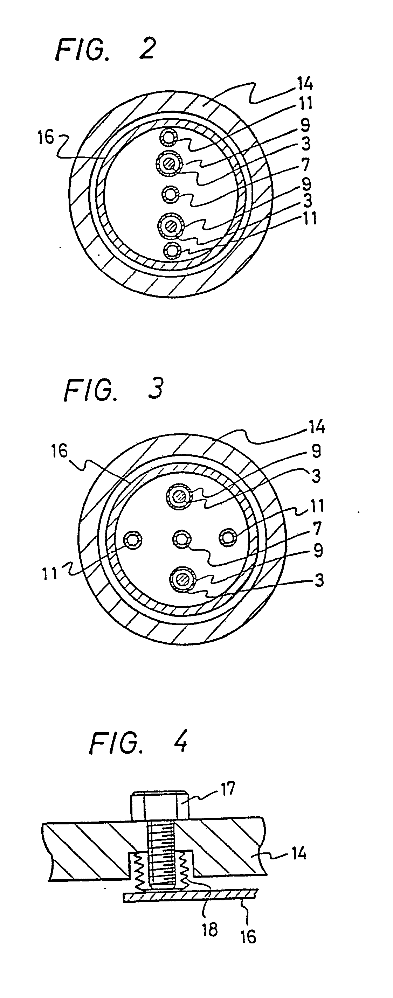

After the fitting of the shaft 14, the inner end of the supporting sleeve 16 is centered by means of three bolts 17 screwed from the outer side of the shaft 14, through sealing bellows 18 (see Fig. 4). On the other hand, a partition plate 20 is fixed unitarily to the outer end of the supporting sleeve 16 so as to extend radially from this end, thereby to maintain a vacuum inside the rotor. The partition plate 20 is fixed, by welding, to the open axial end portion of the shaft 14 so that the supporting sleeve 16 is supported by the shaft 14 at two axially spaced points. Since the supporting sleeve has a much greater diameter than the pipes, it exhibits a high flexural rigidity and accordingly prevents the generation of vibrations.

Referring to Fig. 2, the power leads 3, the refrigerant supply pipes 7 and the refrigerant discharge pipes 11 are disposed in a line.

The space in the hollow shaft 14 is so narrow that is is much better for the leads 3 and pipes 7, 11 to be disposed as shown in Fig. 3, wherein the leads 3 and pipes 7, 11 are disposed separately from one another for ease of access and working.

Thus, since the fixing work can be made from the outer peripheral side, the work can be done quite easily and it is possible to fix the power lead and the refrigerant supply and discharge pipes to the shaft rigidly with very little gap to prevent the generation of vibration. In addition, it is possible to adjust the center of rotational gravity of the components inside the shaft such as the power leads and pipes to coincide with the central axis of the rotor and to avoid the generation of vibration so as not to seriously damage the stability of the superconductive state of the rotor.

## Claims

1. A superconductive rotor having a hollow shaft (14) leading thereto, refrigerant supply and discharge pipes (7, 11) extending through the hollow shaft and adapted for supplying and discharging a refrigerant for cooling the rotor, a plurality of spacers (15) disposed in the hollow shaft and holding said pipes, and an axially extending supporting means (16) in the form of a sleeve inside which the spacers (15) are secured, characterized in that said sleeve (16) is located in position in said shaft (14) at a first axial end portion of said sleeve (16) by a partition plate (29) for maintaining a vacuum in said rotor and is held in said shaft (14) by adjusting means (17) for centering said sleeve (16) from the outer side of said shaft (14) at the other axial end portion of said sleeve (16).

2. A superconductive rotor according to claim 1 wherein said spacers (15) are fixed by applying an adhesive through apertures (19) formed in portions of a wall of the sleeve (16).

3. A superconductive rotor according to claim 1 or claim 2 wherein the rotor has a superconductive coil (2, 6) and a power lead (3) leading thereto passes through the hollow shaft (14), and wherein the power lead is also held by the spacers (15).

4. A superconductive rotor according to claim 3, wherein the coil (2, 6) is supported by a torque tube (1) connected to the hollow shaft (14).

5. A superconductive rotor according to any one of the preceding claims wherein said adjusting means for centering said sleeve (16) includes three bolts (17) screwed from the outer side of the hollow shaft (14) at the same axial position.

6. A superconductive rotor according to claim 5, further comprising sealing bellows (18) through which said three bolts (17) are screwed.

7. An electric machine having a superconductive rotor according to any one of the preceding claims carrying a superconductive field coil (2, 6).

## Revendications

1. Rotor supraconducteur comportant un arbre creux (14) aboutissant à ce rotor, des canalisations (7, 11) d'amenée et d'évacuation d'un réfrigérant, qui s'étendent à travers l'arbre creux et sont adaptés pour délivrer et évacuer un réfrigérant pour le refroidissement du rotor, une pluralité d'entretoises (15) disposées dans l'arbre creux et maintenant lesdites canalisations, et des moyens de support (16) s'étendant axialement et possédant la forme d'un manchon, à l'intérieur duquel les entretoises (15) sont fixées, caractérisé en ce que ledit manchon (16) possède une première partie d'extrémité axiale disposée dans ledit arbre (14) en étant soutenue par une plaque de séparation (20) servant à maintenir un vide dans ledit rotor et est maintenu dans ledit arbre (14) par des moyens de réglage (17) servant à centrer ledit manchon (16) à partir du côté extérieur dudit arbre (14), sur l'autre partie d'extrémité axiale dudit manchon (16).

2. Rotor supraconducteur selon la revendication 1, dans lequel lesdites entretoises (15) sont fixées par application d'un adhésif dans des ouvertures (19) ménagées dans des parties d'une paroi du manchon (16).

3. Rotor supraconducteur suivant la revendication 1 ou 2, dans lequel le rotor possède une bobine supraconductrice (2, 6) et un conducteur d'alimentation en énergie (3) aboutissant à cette bobine traverse l'arbre creux (14), et dans lequel le conducteur d'alimentation en énergie est également maintenu par les entretoises (15).

4. Rotor supraconducteur selon la revendication 3, dans lequel la bobine (2, 6) est soutenue par un tube de transmission de couple (1) raccordé à l'arbre creux (14).

5. Rotor supraconducteur selon l'une quelconque des revendications précédentes, dans lequel lesdits moyens de réglage servant à centrer ledit manchon (16) incluent trois boulons (17) vissés à partir du côté extérieur de l'arbre creux (14), dans la même position axiale.

6. Rotor supraconducteur selon la revendication 5, comportant en outre des soufflets d'étanchéité (18), à travers lesquels lesdits trois boulons (17) sont vissés.

7. Machine électrique comportant un rotor semiconducteur suivant l'une quelconque des revendications précédentes, comportant une bobine de champ supraconductrice (2, 6).


**Patentansprüche**

1. Supraleitfähiger Läufer mit einer zu diesem führenden hohlen Welle (14), Kühlmittelzu- und -abführrohren (7, 11), die durch die hohle Welle verlaufen und zur Zu- und Abführung eines Kühlmittels zum Kühlen des Läufers geeignet sind, einer Vielzahl von in der hohlen Welle angeordneten und die Rohre haltenden Abstandselementen (15), sowie einer in Axialrichtung verlaufenden Stützeinrichtung (16) in Form einer Hülse, innerhalb der die Abstandselemente (15) befestigt sind, dadurch gekennzeichnet, daß die Hülse (16) an einem ersten axialen Endabschnitt der Hülse (16) durch eine Trennplatte (20) in der Welle (14) positioniert ist, um in dem Läufer ein Vakuum aufrecht zu erhalten, und am anderen axialen Endabschnitt der Hülse (16) durch eine Justiereinrichtung (17) zum Zentrieren der Hülse (16) von der Außenseite der Welle (14) in der Welle (14) gehalten ist.

2. Supraleitfähiger Läufer nach Anspruch 1, wobei die Abstandselemente (15) durch Auftragen eines Klebstoffs durch in Abschnitten einer Wand der Hülse (16) gebildete Öffnungen (19) fixiert sind.

3. Supraleitfähiger Läufer nach Anspruch 1 oder 2, wobei der Läufer eine supraleitfähige Spule (2, 6) aufweist und eine zu dieser führende Energieleitung (3) durch die hohle Welle (14) verläuft, und wobei die Energieleitung ebenfalls durch die Abstandselemente (15) gehalten ist.

4. Supraleitfähiger Läufer nach Anspruch 3, wobei die Spule (2, 6) durch ein mit der hohlen Welle (14) verbundenes Torsionsrohr (1) gestützt ist.

5. Supraleitfähiger Läufer nach einem der vorhergehenden Ansprüche, wobei die Justiereinrichtung zum Zentrieren der Hülse (16) drei von der Außenseite der hohlen Welle (14) an der gleichen axialen Stelle eingeschraubte Bolzen (17) umfaßt.

6. Supraleitfähiger Läufer nach Anspruch 5, ferner umfassend einen Dichtungsbalg (18), durch den die drei Bolzen (17) hindurchgeschraubt sind.

7. Elektrische Maschine mit einem eine supraleitfähige Feldspule (2, 6) tragenden supraleitfähigen Läufer nach einem der vorhergehenden Ansprüche.

FIG. 1

FIG. 2

FIG. 3

FIG. 4